# EUROPEAN PATENT APPLICATION

(11) **EP 1 524 058 A2**
(43) Date of publication of application: **20.04.2005**
(21) Application number: 04256206.6
(22) Date of filing: 07.10.2004
(51) Int. Cl.: B23G 1/18, B23Q 5/34

(54) **Dual motor tapping machine**

(30) Priority: 17.10.2003 US 688456
(71) Applicant: ArvinMeritor Technology, LLC, Troy, MI 48084 (US)
(72) Inventor: Frye, Randy, Fayetteville, North Carolina 28306 (US); Ollis, Danny, Fayetteville, North Carolina 28304 (US); Morris, David, Fayetteville, North Carolina 28304 (US)
(74) Representative: Jones, John Bryn

(57) **Abstract**

A cutting machine (10) is provided using two electric motors (14,16) that are run simultaneously. A coupling assembly (17) is interconnected between a tool holder (28) and the drive motors (14,16) to selectively engage the drive motors. One of the drive motors (14) is used to move the tool holder (28) in a forward direction, and the other drive motor (16) is used to move the tool holder (28) in a rearward direction.

## Description

### BACKGROUND OF THE INVENTION

This invention relates to a cutting machine, and more particularly, the invention relates to a cutting machine suitable for use in tapping holes.

Numerous machining operations require hole tapping to form threads. Typical tapping machines use a single motor that is driven in both forward and reverse rotational directions. The motor may be rotationally coupled to a lead screw, which supports a tool holder having the tapping tool. Rotation of the lead screw advances and retracts the tapping tool.

To form the threads in a part, the tapping tool is rotationally driven in a forward direction. Once the tapping tool reaches the desired depth, the motor must be stopped so that the tapping tool may be rotationally driven in the reverse direction to retract the tapping tool from the part. Relatively large motors are used in the tapping machine so that a significant amount of kinetic energy must be overcome in stopping the motor. Moreover, the motors have special control packages relating to stopping and changing the rotational direction of the motor, and these control packages are expensive to operate and maintain. In addition to the special control packages, the motors themselves are typically specially constructed to perform such a tapping operation. For example, since the lead screw is directly coupled to the motor, the bearings of the motor must withstand the thrust loads during the tapping operation.

As with any machining operation, it is desirable to use low cost equipment that has minimal set-up time and maintenance. Furthermore, it is desirable to have a fast cycle time to increase the through-put of the parts through the tapping operation.

### SUMMARY OF THE INVENTION

The inventive tapping machine provides a lead screw assembly having a tool holder. The lead screw assembly is supported on bearing blocks and, in one example, supports a pair of driven sprockets at an end opposite the tool holder. The lead screw assembly and first and second motors are supported on a machine support structure. The first and second motors are interconnected to the lead screw by drive belts. For the example shown, each of the first and second drive motors may include a clutch brake driven by the motors. The clutch brakes support a drive sprocket that is coupled to the driven sprockets by the drive belts.

The first and second motors are driven simultaneously, and the clutch/brakes are manipulated to selectively rotationally couple the motors to the lead screw to advance and retract the tool holder. For example, the first motor brake/clutch is engaged while the second motor brake/clutch is disengaged to rotationally drive the lead screw in a first direction and advance the tool holder. The first motor clutch/brake is disengaged and the second motor clutch/brake is engaged to rotationally drive the lead screw in an opposite second direction to retract the tool holder. A controller is connected to various sensors, valves, and/or actuators to monitor and control the automated operation of the tapping machine.

Accordingly, the above invention provides a low cost tapping machine having a fast cycle time with minimal set-up time and maintenance.

These and other features of the present invention can be best understood from the following specification and drawings, the following of which is a brief description.

### BRIEF DESCRIPTION OF THE DRAWINGS

Figure 1 is a perspective view of one example of this invention with the controls and sensors depicted schematically.
Figure 2 is a flowchart of one of the inventive embodiments.

### DETAILED DESCRIPTION OF THE PREFERRED EMBODIMENT

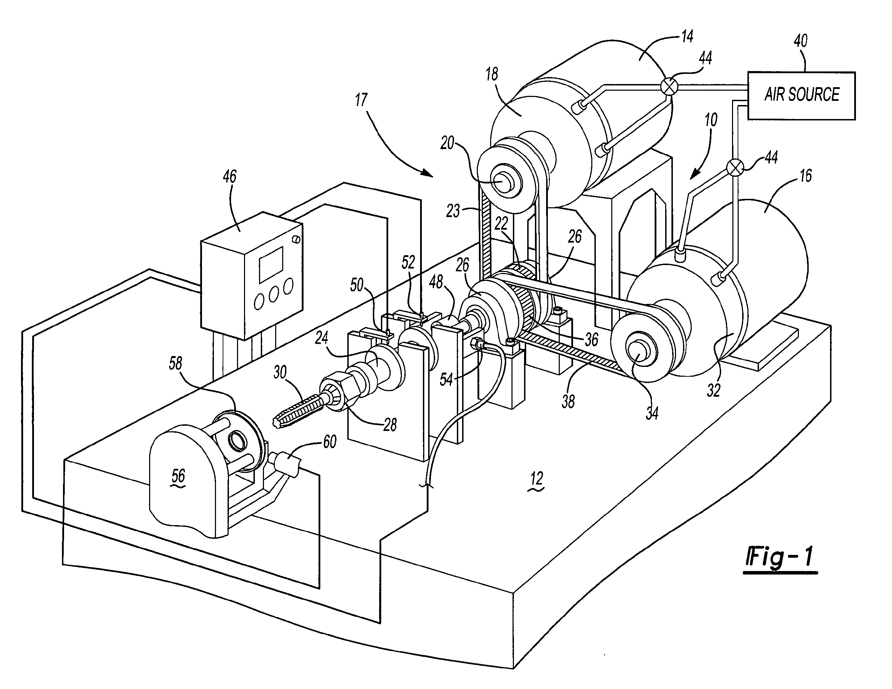

The inventive cutting machine 10 is shown in Figure 1. The cutting machine 10 may be used for tapping holes in tapping plates used in oil filters. However, although the cutting machine 10 is described relative to tapping operations, one of ordinary skill in the art will appreciate that the inventive cutting machine 10 may be used for any number of machining operations.

The cutting machine 10 includes a support structure 12 that comprises various plates and bracketry for supporting the components of the cutting machine 10. First 14 and second 16 motors are mounted on the support structure 12. In one example embodiment, the motors 14 and 16 may be standard 900 rpm 215T frames, which are one-fifth the cost of the tapping motors typically used in tapping machines. The motors 14 and 16 operate continuously in one direction, so there is no requirement for stopping and reversing the motors, which increases the motor life and extends cycle time. The motor 14 and 16 are controlled by standard AC inverter drives, which are one-tenth the cost of prior art controllers.

The motors 14 and 16 are interconnected to a lead screw 24 by a coupling assembly 17. The lead screw 24 is mounted on the support structure 12 using bearing blocks 26. An end of the lead screw 24 includes a tool holder or chuck 28 supporting a tapping tool 30. The bearing blocks 26 withstand the thrust load typically experienced by the prior art reversible motor.

The inventive cutting machine 10 may be configured in any number of arrangements. For the example shown, the first 14 and second 16 motors are mounted with their rotational axes parallel to one another in the example shown. In that example, the motor axes are offset from the axis of the lead screw 24 and parallel to the lead screw 24.

The coupling assembly 17 comprises components transferring rotation from the motors 14 and 16 to the tool holder 28. The first motor 14 rotationally drives a clutch/brake 18. The clutch/brake 18 supports a drive sprocket 20 that is coupled to a driven sprocket 22, which is supported on the end of the lead screw 24 opposite the chuck 28, by a drive belt 23. Similarly, the second motor 16 rotationally driven a clutch/brake 32 having a drive sprocket 34. The drive sprocket 34 is coupled to a driven sprocket 36 on the lead screw 24 by the belt 38. The driven sprockets 22 and 36 are supported on a jackshaft coupled to the lead screw.

For the example shown, the clutch/brakes 18 and 32 may be double acting piston units available from the Carlson Company, PowerFlo Model No. 1375CAB-CS. Air from an air source 40 is coupled to the clutch/brakes 18 and 32 using pneumatic lines and valves 44. The valves 44 and air source 40 are shown schematically and may be arranged in any suitable manner. When air is applied to a clutch port, the piston moves to engage the clutch and release the brake. When air is supplied to a brake port, the piston disengaged the clutch and engages the brake. More detail of the operation of the clutch/brakes 18 and 32 will be described below.

A controller 46 is connected to the valves 44 and other sensing devices and actuators to control and monitor the automated operation of the cutting machine 10. The lead screw 24 includes a feature 48 used in detecting the longitudinal position of the tapping tool 30. A forward 50 and rearward 52 stroke sensor may be mounted on a plate near the feature 48. The feature 48 is aligned with the forward stroke sensor 50 when the tapping tool reaches its forward-most desired position. Similarly, the feature 48 is aligned with the rearward stroke sensor 52 when the tapping tool 30 reaches its rearward-most desired position. The cutting machine 10 may also include an overrun sensor 54 that is aligned with the feature 48 when the tapping tool 30 is in an undesired position. The sensors 50, 52, and 54 are connected to the controller 46.

A machine 56 moves and holds a part 58 to be machined in a desired manner near the tapping tool 30. The machine 56 may include a part position sensor 60 that is connected to the controller 46 to coordinate the operation of the clutch/brakes 18 and 32.

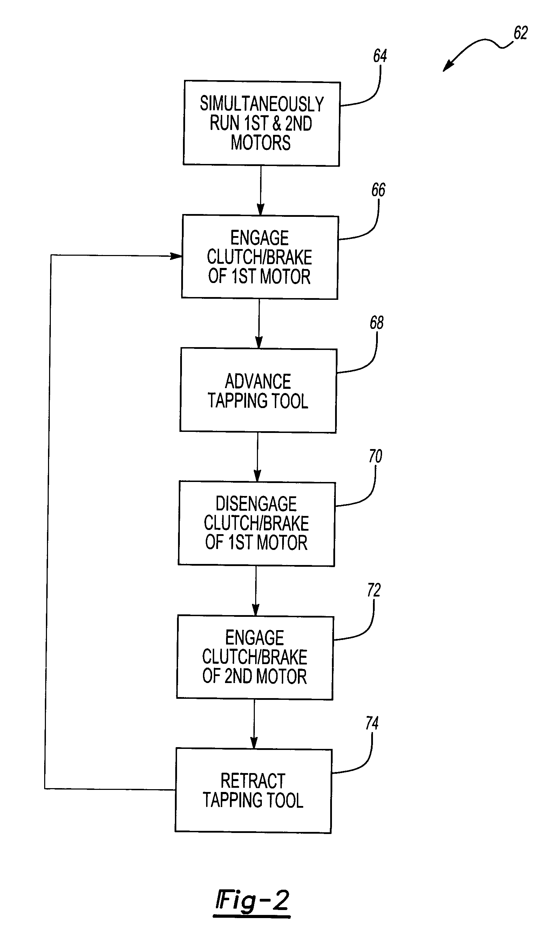

One example of the inventive cutting process 62 is shown in Figure 2. The first 14 and second 16 motors are simultaneously driven, as indicated at 64. For the example shown, the motors 14 and 16 are driven in opposite directions relative to one another. During start-up, both brakes of the clutch/brakes 18 and 32 may be engaged. Once the part position sensor 60 detects a part 58 in a desired position, the clutch port of the clutch/brake 18 of the first motor 14 is pressurized to engage the clutch and release the brake. Once the clutch is engaged, as indicated at 66, the lead screw assembly is rotationally driven by the belt 23 to advance the tapping tool, as indicated at 68. The hole in the part 58 is tapped to form the threads.

Once the forward stroke sensor 50 detects the feature 48, the brake port of the clutch/brake 18 is pressurized to disengage the clutch and engage the brake, which stops the forward rotation of the lead screw 24, as indicated at 70. The clutch/brake 32 of the second motor 16 is manipulated to rotationally drive the lead screw 20 in reverse. Specifically, the clutch port of the clutch/brake 32 is pressurized to engage the clutch and release the brake which rotationally drives the lead screw 24 rearward through belt 38, as indicated at 72. The tapping tool 30 is retracted as indicated at block 74. The machine 56 moves the next part 58 into the desired position. Once the part position sensor 60 detects the part 58 and the rearward stroke sensor 52 detects the feature 48, the tapping operation is repeated.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A cutting machine comprising:
a lead screw assembly having a tool holder;
first and second motors; and
a coupling assembly interconnecting the first and second motors to the lead screw assembly for selectively transmitting rotational drive from the first and second motors to the lead screw assembly, the coupling assembly having a first engaged condition rotationally coupling the first motor to the lead screw assembly and moving the tool holder in a first direction, and a second engaged condition rotationally coupling the second motor to the lead screw assembly and moving the tool holder in a second direction opposite the first direction.

2. The cutting machine according to claim 1, wherein the first and second motor each include a rotational axis with the rotational axes parallel to one another.

3. The cutting machine according to claim 2, wherein the rotational axes are parallel to a lead screw assembly axis.

4. The cutting machine according to any preceding claim, wherein the coupling assembly includes first and second clutch/brakes respectively interconnected between the first and second motors and the lead screw assembly.

5. The cutting machine according to claim 4, wherein the coupling assembly includes first and second drive sprockets respectively receiving rotational drive from the first and second clutch/brakes.

6. The cutting machine according to claim 5, wherein the coupling assembly includes first and second driven sprockets supported on the lead screw assembly respectively coupled to the first and second drive sprockets by first and second belts.

7. The cutting machine according to any one of claims 4 to 6, wherein each of the clutch/brakes includes a double-acting piston movable between a clutch position and a brake position.

8. The cutting machine according to claim 1, wherein the first and second motors are simultaneously rotationally driven with the tool holder moving between the first and second directions.

9. The cutting machine according to claim 8, wherein the coupling assembly includes at least one clutch/brake, and a controller commands the at least one clutch/brake to obtain at least one of the first and second engaged conditions.

10. The cutting machine according to claim 9, wherein lead screw assembly position sensors are connected to the controller providing lead screw assembly position information, the controller commanding at least one clutch/brake in response to the lead screw assembly position information.

11. A cutting process comprising the steps of:
a) simultaneously rotating first and second drive motors;
b) manipulating a coupling assembly and transferring rotation from the first drive motor to a tool holder;
c) moving the tool holder in a first direction;
d) manipulating the coupling assembly and terminating transfer of rotation from the first drive motor to the tool holder and transferring rotation from the second drive motor to the tool holder; and
e) moving the tool holder in a second direction opposite the first direction.

12. The process according to claim 11, wherein step b) is performed in response to detecting a part to be machined,
and/or wherein step c) moves the tool holder toward the part to be machined,
and/or wherein step d) is performed in response to detecting a forward stroke position,
and/or wherein step b) is performed in response to detecting a rearward stroke position,
and/or wherein step d) is performed in response to detecting an overrun stroke position.

13. The process according to claim 11, wherein a lead screw is arranged between the tool holder and the first and second drive motors.

14. The process according to any one of claims 11 to 13, wherein first and second clutch/brakes respectively are arranged between the first and second drive motors and the lead screw.

15. The process according to claim 14, wherein steps b) and d) are performed by actuating a double acting piston in at least one of the clutch/brakes.
